**Europäisches Patentamt**

**European Patent Office**

**Office européen des brevets**

(19)

(11) Numéro de publication : **0 047 739 B2**

(12) # NOUVEAU FASCICULE DE BREVET EUROPEEN

(45) Date de publication du nouveau fascicule du brevet : **11.09.91 Bulletin 91/37**

(51) Int. Cl.⁵ : **B65G 15/36, B65G 15/40**

(21) Numéro de dépôt : **80902291.6**

(22) Date de dépôt : **01.12.80**

(86) Numéro de dépôt international :
**PCT/FR80/00173**

(87) Numéro de publication internationale :
**WO 81/01697 25.06.81 Gazette 81/15**

(54) BANDE TRANSPORTEUSE POUR MATERIAUX.

(30) Priorité : **17.12.79 FR 7931030**

(43) Date de publication de la demande :
**24.03.82 Bulletin 82/12**

(45) Mention de la délivrance du brevet :
**21.11.85 Bulletin 85/47**

(45) Mention de la décision concernant
l'opposition :
**11.09.91 Bulletin 91/37**

(84) Etats contractants désignés :
**CH DE GB LI NL SE**

(56) Documents cités :
**DE-B- 1 066 136**
**DE-B- 1 182 593**

(56) Documents cités :
**DE-C- 963 407**
**DE-U- 1 655 698**
**FR-A- 321 901**
**FR-A- 949 547**
**FR-A- 1 340 919**
**FR-A- 1 603 133**
**GB-A- 912 985**

(73) Titulaire : **SOCIETE FRANCAISE DE BANDES TRANSPORTEUSE**
**2, place Aristide Briand**
**F-Argenteuil (Val d'Oise) (FR)**

(72) Inventeur : **JAUBERT, Pierre**
**12 Rue de la Meulonnière**
**F-92500 Rueil-Malmaison (FR)**

(74) Mandataire : **Fort, Jacques**
**CABINET PLASSERAUD 84, rue d'Amsterdam**
**F-75009 Paris (FR)**

EP 0 047 739 B2

## Description

L'invention est relative aux bandes transporteuses souples comprenant une carcasse ou armature interne assurant la résistance longitudinale et transversale aux efforts mécaniques, cette carcasse étant recouverte de couches de revêtement en caoutchouc ou élastomère similaire. Ces bandes transporteuses sont normalement fabriquées sous une forme plate ce qui permet de les rouler en rouleaux cylindriques pour le stockage et le transport sur le lieu d'utilisation mais lorsqu'elles sont utilisées pour transporter des matériaux en vrac elles sont généralement supportées et guidées par des rouleaux leur donnant une forme en auge à fond plat, ce qui augmente la capacité de transport en diminuant les risques de débordement des matériaux. L'invention concerne spécialement les bandes transporteuses fabriquées sous une forme plate et destinées à être utilisées sur des installations comprenant des rouleaux de guidage donnant auxdites bandes une forme en auge en section transversale.

Parmi les diverses contraintes imposées pour la réalisation et l'exploitation de ces bandes, la stabilité de la bande sur sa trajectoire constitue une condition importante d'un bon fonctionnement car autrement la bande risque de se déplacer latéralement jusqu'à heurter l'infrastructure du transporteur et, de ce fait, de s'user ou de s'endommager prématurément. Un bon guidage de la bande nécessite donc un nombre suffisant de rouleaux supports assez rapprochés les uns des autres. En outre on donne généralement à ces rouleaux un pincement oblique par rapport à la direction longitudinale pour exercer sur la bande des efforts tendant à centrer la bande sur son train de rouleaux supports. Cependant toutes ces mesures prises pour garantir la stabilité latérale de la bande tendent à augmenter les résistances dues aux frottements, d'où une augmentation des tensions de service exercées sur la bande, une augmentation de la puissance des installations d'entraînement et la nécessité de renforcer en conséquence la résistance des bandes elles-mêmes pour pouvoir supporter ces efforts.

Il a déjà été proposé (FR-A-1 340 919) des bandes transporteuses susceptibles de prendre naturellement une section en forme d'auge au repos et ces bandes peuvent comprendre un renforcement de trame de largeur limitée dans le revêtement de la face porteuse. Cependant, cette trame doit présenter une faible résistance pour ne pas s'opposer au retrait transversal du revêtement et pour ne pas gêner la mise en auge spontanée de la bande. On considère ici qu'une telle bande ayant une section en auge au repos présente certains inconvénients, en particulier pour son conditionnement avant usage.

Des bandes transporteuses selon le préambule de la revendication 1, plates au repos, et destinées à fonctionner en forme d'auge sur un transporteur, ont déjà été réalisées selon le brevet FR-A-1 603 133. Elles sont renforcées par une nappe longitudinale, en plusieurs parties, pour créer des zones de plus grande souplesse favorable à la mise en auge. Ces bandes transporteuses présentent dans lesdites zones de souplesse une fragilité à la fatigue en service. De plus, l'emballage et la manutention sont rendus difficiles pour une épaisseur non constante de la bande transporteuse.

L'invention a pour objet une bande transporteuse à caractéristique de centrage améliorée, plus facile à stabiliser sur sa trajectoire et permettant, en conséquence, d'alléger aussi bien les systèmes de guidage des transporteurs que la construction de la bande elle-même. Selon l'invention, cette bande est caractérisée en ce que la première nappe de carcasse est une nappe de résistance longitudinale en câblés longitudinaux, la seconde nappe de carcasse est une nappe de résistance transversale en câblés transversaux et la couche étroite est une couche supérieure de raidissement à forte résistance en compression transversale, formée d'éléments transversaux parallèles, constitués d'éléments raides tels que des barreaux ou des lames

De préférence la largeur de cette couche de raidissement est choisie pour correspondre au fond plat de l'auge formée par les rouleaux de guidage centraux et latéraux du transporteur ce qui tend à favoriser l'auto-centrage de la bande entre les rouleaux latéraux inclinés relevant les bords de la bande pour lui donner cette forme en auge. Il en résulte les avantages suivants :

La suppression ou la réduction de l'angle de pincement des rouleaux de guidage, ce qui réduit la puissance absorbée par frottement et l'usure de la bande. Lorsque le pincement peut-être complètement supprimé la bande peut alors être utilisée dans les deux sens de marche. Le brin de retour de la bande peut être supporté essentiellement par des trains de rouleaux plats, éventuellement associés avec seulement quelques rouleaux stabilisateurs en auget plus espacés.

La possibilité d'augmenter les capacités de charge soit par l'augmentation de l'angle formé par les bords de la bande mise en auge, soit par l'élargissement du fond de l'auge grâce à la plus grande souplesse transversale des côtés de la bande. De plus, pour une même forme d'auge donnée à la bande, la meilleure stabilité de la bande sur ses rouleaux de guidage autorise une plus grande capacité pratique de chargement, se rapprochant davantage de la capacité théorique permise par cette forme d'auge, sans risque de débordement latéral du produit transporté.

Un allègement de la carcasse qui constitue la partie la plus coûteuse de la bande.

Un exemple de réalisation d'une bande selon l'invention est décrit ci-après en référence au dessin ci-joint dans lequel :

La figure 1 est une vue en coupe transversale de la bande à plat.

La figure 2 est une vue en perspective avec des arrachements étagés.

La figure 3 est une vue en coupe transversale de la bande mise en auge.

Dans l'exemple illustré, la bande transporteuse est fabriquée à plat et elle a par conséquent une forme plate au repos avec une épaisseur constante d'un bord à l'autre. Cette bande comprend une carcasse interne de résistance mécanique constituée essentiellement de deux nappes superposées 1, 2 noyées entre deux couches de revêtement 3, 4 en caoutchouc vulcanisé ou matériau souple similaire.

L'ensemble de la carcasse s'étend transversalement suivant la largeur de la bande en négligeant l'épaisseur des talons prévus de chaque côté pour protéger de l'usure les bords de la bande. La nappe inférieure 1 est constituée de câblés longitudinaux parallèles présentant la résistance nécessaire, tels que des câblés d'acier ou des câblés textiles à haute résistance, pour supporter la tension de service et les efforts longitudinaux de traction. La nappe 2 est constituée de câblés transversaux parallèles, en métal ou en textile, et son rôle est essentiellement de supporter les chocs du chargement, d'empêcher la déchirure longitudinale de la bande, d'en permettre le jonctionnement des extrémités par agrafage pour la mise en sans-fin et de donner "du corps" à l'ensemble de la bande.

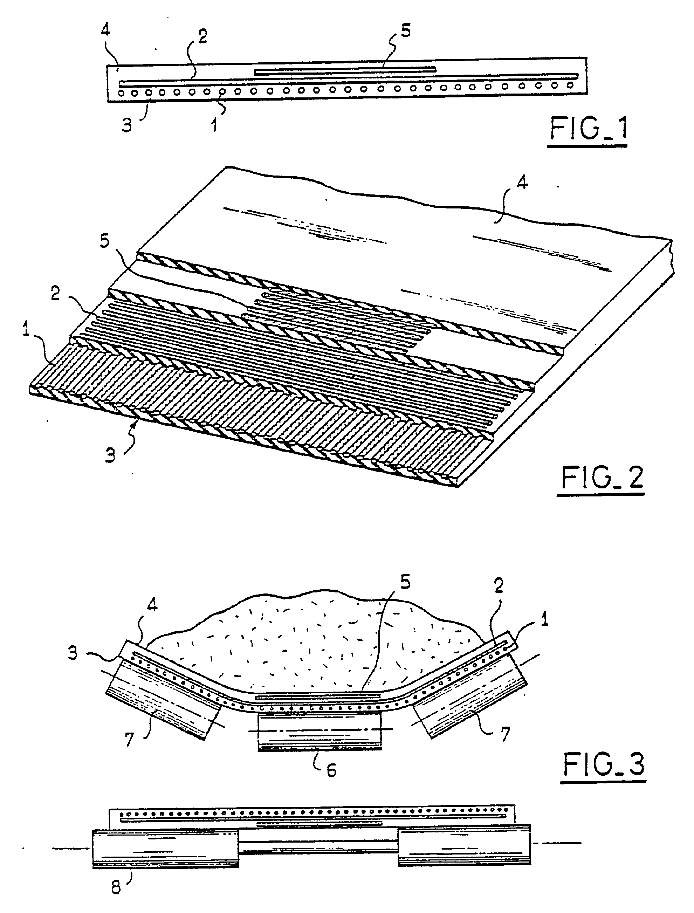

La couche étroite de raidissement transversal 5 est placée au-dessus de la nappe transversale 2 de la carcasse, de manière symétrique par rapport au plan longitudinal médian de la bande, de façon à réserver deux zones latérales relativement plus souples. La zone centrale renforcée par la couche étroite 5 correspond pratiquement au fond plat de l'auge soutenue par le rouleau central 6 des augets et les zones latérales correspondent aux parties inclinées soutenues par les rouleaux inclinés 7 des augets (fig. 3).

La couche étroite de raidissement 5 est agencée de façon à présenter une résistance élevée à la compression dans le sens transversal. Elle est constituée par des éléments transversaux raides tels que des barreaux ou des lames transversales disposés parallèlement les uns aux autres dans un même plan. Il est préférable que la couche étroite 5 soit constituée avec des éléments transversaux métalliques, tels que barreaux ou lames qui sont à la fois plus rigides en flexion et plus lourds que le volume de caoutchouc qu'ils remplacent.

Les couches de revêtement en caoutchouc 3 et 4 sont telles que la bande terminée a une épaisseur uniforme et régulière d'un bord à l'autre. En particulier l'épaisseur de ces couches 3, 4 est telle que, de préférence, la nappe de résistance transversale 2 de la carcasse est située approximativement à mi-épaisseur de la bande, dans le plan de l'axe neutre de flexion transversale de la bande.

Dans la bande ci-dessus décrite les zones latérales de la bande non intéressée par la couche 5 présentent une souplesse relativement grande. Au contraire, la zone centrale renforcée par les deux épaisseurs successives des nappes de câblés transversaux 2 et 5 est plus raide en compression et en flexion transversale. Cette différence de souplesse entre la zone centrale et les zones latérales tend à favoriser l'auto-centrage de la bande lorsqu'elle se déplace longitudinalement sur les rouleaux 6-7 des augets successifs du transporteur. Cet effet d'auto-centrage est d'autant plus accentué lorsque les éléments transversaux de la couche étroite 5 sont des éléments à poids spécifique élevé, probablement parce que la gravité accrue de la partie centrale de la bande accentue les forces de recentrage concourant à la stabilité de la bande sur sa trajectoire. D'autre part, la grande souplesse relative des zones latérales autorise un relevage plus accentué des bords, c'est-à-dire une augmentation de la capacité de transport de la bande ainsi mise en auge.

La figure 3 montre aussi le guidage du brin de retour de la bande transporteuse sur des rouleaux 8 disposés suivant un train de roulement plat. Ces rouleaux peuvent être cylindriques d'un bord à l'autre ou, de préférence, ils peuvent être évidés dans leur partie centrale suivant une largeur correspondante à celle du fond des augets, ce qui offre le double avantage de réduire l'encrassement des rouleaux de retour par la face porteuse de la bande et de créer, en association avec la couche étroite de raidissement, une tendance à l'auto-centrage de la bande sur le train de roulement de retour.

Bien entendu, l'invention est susceptible d'autres variantes, en particulier pour des questions d'adaptation aux infrastructures des transporteurs existants ayant à utiliser de telles bandes.

Ainsi par exemple la couche étroite de raidissement 5 pourrait éventuellement être divisée axialement en deux parties juxtaposées suivant l'axe longitudinal de la bande pour former au centre une charnière longitudinale permettant à la bande d'être utilisée sur des transporteurs existants ayant des rouleaux de retour arrangés en V.

## Revendications

1. Bande transporteuse plate au repos et destinée à fonctionner en forme d'auge sur un transporteur, dont la carcasse intérieure comprend deux nappes superposées (1-2) s'étendant sensiblement suivant toute la largeur de la bande et une couche étroite (5) de largeur comprise entre 1/4 et 2/3 de la largeur de la bande et symétrique par rapport au plan longitudinal médian de la bande, caractérisée en ce que la première nappe de carcasse (1) est une nappe de résistance longitudinale en câblés longitudinaux, la seconde nappe de carcasse (2) est une nappe de résistance transversale en câblés transversaux et la couche étroite (5) est une couche supérieure de raidissement à forte résistance en compression transversale, formée d'éléments transversaux parallèles, constitués d'éléments raides tels que des barreaux ou des lames.

2. Bande transporteuse selon la revendication 1, caractérisée en ce que la carcasse est revêtue de chaque côté de revêtements en caoutchouc (3-4) tels que la bande présente une épaisseur uniforme d'un bord à l'autre et tels que la nappe large de résistance transversale (2) de la carcasse est située approximativement à mi-épaisseur de la bande.

## Claims

1. Conveyor belt which is flat when at rest and intended to function in the form of a through on a conveyor, of which the internal structure comprises two superposed layers (1-2) extending substantially throughout the width of the belt and a narrow layer (5) of a width comprised between 1/4 and 2/3 of the width of the belt and symmetrical with respect to the central longitudinal plane of the belt, characterised in that the first layer (1) of the structure is a layer with longitudinal strength and formed by longitudinal cords, the second layer (2) of the structure is a layer with transverse strength and formed by transverse cords, and the narrow layer (5) is an upper high-strength stiffening layer under transerse compression formed by parallel transverse elements constituted of stiff elements, such as bars or strips.

2. Conveyor belt according to claim 1, characterised in that the structure is covered at each side by rubber coatings (3-4) such that the belt has a uniform thickness from one edge to the other and such that the broad layer (2) for transverse strength of the reinforcement is situated approximately at the mid-thickness of the belt.

## Patentansprüche

1. Förderband, das in der Ruhelage eben und in Funktion auf einem Förderer in Form eines Troges einsetzbar ist, dessen innere Karkasse zwei übereinander angeordnete Lagen (1,2) umfaßt, die sich im wesentlichen über die gesamte Breite des Förderbandes erstrecken, sowie eine schmale Schicht (5), deren Breite 1/4 bis 2/3 derjenigen des Förderbandes beträgt und die symmetrisch in bezug auf die Längsmittelebene des Förderbandes angeordnet ist, **dadurch gekennzeichnet**, daß die erste Karkasselage (1) Längsfestigkeit aufweist und aus längsverlaufenden Kabeln besteht, daß die zweite Karkasselage (2) Querfestigkeit aufweist und aus querverlaufenden Kabeln besteht, und daß die schmale Schicht (5) eine obere Versteifungsschicht mit hoher Querfestigkeit ist, die aus parallel zueinander verlaufenden Querelementen besteht, wobei diese Querelemente aus steifen Elementen wie Stabelementen oder Blattelementen bestehen.

2. Förderband nach anspruch 1, **dadurch gekennzeichnet**, daß die Karkasse auf jeder Seite mit Kautschukdeckschichten (3-4) versehen ist, so daß das Band von einer Kante zur anderen eine gleichförmige Dicke hat und sich die Querfestigkeit aufweisende breite Lage (2) der Karkasse der Dicke nach ungefähr in der Bandmitte befindet.

FIG_1

FIG_2

FIG_3